## Europäisches Patentamt

## European Patent Office

## Office européen des brevets

(19)

(11) Veröffentlichungsnummer: **0 290 028**

**A1**

(12)
# EUROPÄISCHE PATENTANMELDUNG

(21) Anmeldenummer: **88107256.5**

(22) Anmeldetag: **05.05.88**

(51) Int. Cl.⁴: **G21C 9/00**

(30) Priorität: **08.05.87 DE 3715466**

(43) Veröffentlichungstag der Anmeldung:
**09.11.88 Patentblatt 88/45**

(84) Benannte Vertragsstaaten:
**ES GR**

(71) Anmelder: **Siemens Aktiengesellschaft Berlin und München**
**Wittelsbacherplatz 2**
**D-8000 München 2(DE)**

Anmelder: **Pall Deutschland GmbH**
**Philipp-Reis-Strasse 6**
**D-6072 Dreieich 1(DE)**

(72) Erfinder: **Engl, Werner**
**Klingenweg 4**
**D-8521 Hessdorf(DE)**
Erfinder: **Randhahn, Horst, Dr.**
**Dresdner Str. 16**
**D-6074 Rödermark(DE)**
Erfinder: **Szymkowiak, Norbert**
**Dreiechstrasse 25**
**D-6057 Dietzenbach(DE)**
Erfinder: **Taetz, Frank, Dr.**
**Teutonenstr. 19 b**
**D-6204 Taunusstein(DE)**

(74) Vertreter: **Mehl, Ernst, Dipl.-Ing. et al**
**Postfach 22 13 17**
**D-8000 München 22(DE)**

(54) **Druckentlastungs- und Filtereinrichtung für kerntechnische Anlagen, insbesondere für Druckwasserreaktoren.**

(57)
2. Aufgabe ist die Rückhaltung von Spaltprodukten, insbesondere spaltstoffbeladenen Aerosolen, welche in störfallbedingt postulierten heißen, unter Überdruck stehenden Dampf-Gas-Gemischen innerhalb des Sicherheitsbehälters von kerntechnischen Anlagen enthalten sind, und die Entspannung der gereinigten Gemischströme ins Freie.

3. Es ist ein Druckbehälter (FDK) vorgesehen, mit wenigstens einem Filterkerzen-Einsatz (5, 3) in seinem Inneren, einem Eintrittsstuzen (2.2) für den zu filternden Gemischstrom auf der Anströmseite der Filterkerzen (5), einem Austrittsstuzen (1.2) für den gereinigten Gemischstrom auf der Abströmseite der Filterkerzen (5) und mit an die Stutzen für Ein- und Austritt des Gemischstromes angeschlossenen Rohrleitungen mit zugehörigen Absperr-und Entspannungs-Einrichtungen. Im Behälter-Inneren sind vorteilhafterweise ein Tröpfchen-Wasserabscheider (6) im Strömungsweg des Gemischstromes zwischen Eintrittstutzen (2.2) und Anströmseite der Filterkerzen (5) und unterhalb des Tröpfchen-Wasserabscheiders (6) eine Kondensat-Sammeleinrichtung mit Kondensat-Auslaßstutzen (8) angeordnet.

FIG 1

## Druckentlastungs-und Filtereinrichtung für kerntechnische Anlagen, insbesondere für Druckwasserreaktoren.

Die Erfindung bezieht sich auf eine Druckentlastungs-und Filtereinrichtung für kerntechnische Anlagen, insbesondere für den Sicherheitsbehälter von Druckwasserreaktoren, gemäß Oberbegriff des Patentanspruchs 1.

Eine solche Druckentlastungs-und Filtereinrichtung ist bekannt, z.B. aus der Zeitschrift "Nuclear Engineering International", März 1987, Seite 37, oberes Bild in der rechten Spalte. Die Filterstrecke ist dabei dreifach gestaffelt: Auf ein Vorfilter für Korngrößen von 1 bis 10 μm folgt ein rostfreies Stahlgewebefilter für Korngrößen um 0,2 μm und darauf ein Jodfilter, welches das Radiojod mit einem Abscheidegrad von 99 bis 99,9 % zurückhält. Über die Filterkonstruktion ist nichts Näheres ausgesagt.

Aus der DE-PS 32 12 265 läßt sich weiterhin eine gattungsgemäße Druckentlastungs-und Filtereinrichtung entnehmen, die allerdings für den Einsatz bei gasgekühlten Kernkraftanlagen vorgesehen ist. Hier sind auf dem Wege des zu filternden Gemischstromes Regenerativ-Wärmetauscher zur Kühlung, eine Ablagerungsstrecke für feste Spaltprodukte, eine Rekombinationsanlage für brennbare Gase und ferner ein Filtersystem für gasförmige Spaltprodukte wie Jod und Schwebstoffe vorgesehen. Auch hier ist über die konstruktive Ausbildung des Filtersystems nichts Näheres gesagt. Eng im Zusammenhang mit den vorgenannten beiden Literaturstellen steht die Phase B der Deutschen Risikostudie Kernkraftwerke, aufgrund deren Ergebnisse die Reaktorsicherheitskommission (RSK) in ihrer Sitzung im Dezember 1986 zur Reduzierung der Aktivitätsabgabe eine gefilterte Druckentlastung des Reaktorsicherheitsbehälters bei Störfällen mit langsamem Druckaufbau im Reaktorsicherheitsbehälter vorgeschlagen hat.

Durch die Erfindung soll eine dieser RSK-Forderung auf optimale Weise rechnungtragende Druckentlastungs-und Filtereinrichtung geschaffen werden, welche nur ein kleines Bauvolumen benötigt und sich deshalb auch innerhalb des Containments unterbringen, d.h. insbesondere auch nachrüsten läßt. Weitere Merkmale der Aufgabe sind: Universelle Verwendbarkeit für Dampf-Gas-Gemische und auch trockene Gase, hoher Abscheidegrad, im Bedarfsfalle Auswechselbarkeit der Filterelemente und Kombinationsmöglichkeit mit einem Wasserabscheider sowie einem Rekombinator bzw. einer Verbrennungseinrichtung für Wasserstoff.

Erfindungsgemäß wird die gestellte Aufgabe mit einer gattungsgemäßen Druckentlastungs-und Filtereinrichtung durch die im Kennzeichen des Patentanspruchs 1 angegebenen Merkmale gelöst. Vorteilhafte Weiterbildungen sind in den Patentansprüche 2 bis 11 angegeben.

Die mit der Erfindung erzielbaren Vorteile sind vor allem in Folgendem zu sehen: Es werden als Filterelemente Filterkerzen verwendet, wie sie sich für die Reinigung von Abwasser seit langem schon bewährt haben. Es handelt sich damit um zuverlässige, in hoher Stückzahl produzierte Filterelemente. Die Filterkerzen bestehen aus einem Stahlrohr mit Durchbrüchen, auf dessen äußerer Oberfläche mehrere Lagen von gepreßtem Edelstahldrahtgeflecht (Edelstahl-Faservlies) mit unterschiedlichen Drahtdurchmessern und gesintertem Stahl aufgebracht werden können. Je nach der verlangten Druckfestigkeit können zusätzliche Stützkonstruktionen hinzugefügt werden. Gemäß Anspruch 3 können die Filterkerzen in einer Rohrplatte innerhalb des Druckbehälters zu Batterien kombiniert werden, wobei der in Druckbehälter integrierte Tröpfchen-Wasserabscheider bzw. Wasser-/Nebelabscheider besonders vorteilhaft ist. Der Abscheidegrad eines solchen Druckbehälters mit eingesetzter Filterkerzen-Batterie ist für Aerosole 99,9 %. Der Betriebsdruck ist im allgemeinen 15 bar, es ist aber Ertüchtigung des Druckbehälters bis zu 180 bar möglich. Der Druckverlust beträgt lediglich 45 mbar. Die maximale Temperatur der zu filternden Gemischströme und damit der Filterkerzen kann bis zu 650° C betragen. Die relative Feuchte kann, bezogen auf den Abscheidegrad für Aerosole, 100 % betragen. Die Einbaumaße eines solchen Filterkerzen-Druckbehälters sind, wenn man eine Filterkerzenlänge von 1 m und einem Durchmesser von 100 mm zugrundelegt, ca. 1,5 m im Durchmesser x 3 m in der Höhe. Aufgrund dieser ausgezeichneten Eigenschaften ist der Filterkerzen-Druckbehälter im Rahmen der Druckentlastungs-und Filtereinrichtung nach der Erfindung zur Erfüllung der Anforderungen, wie sie zum gefilterten Druckabbau bei einem DWR-Containment im (an sich unwahrscheinlichen) postulierten Störfall des Kernschmelzens bestehen, bestens geeignet.

Im folgenden werden anhand mehreren, in der Zeichnung dargestellter Ausführungsbeispiele die Druckentlastungs-und Filtereinrichtung nach der Erfindung sowie ihre Wirkungsweise und ihre Vorteile noch näher erläutert. In der Zeichnung zeigt in schematischer, vereinfachter Darstellung:

FIG 1 im Aufriß einen Filterkerzen-Druckbehälter mit integriertem Tröpfchenabscheide und Kondensataustritt.

FIG 2 die Zuordnung eines solchen Filterkerzen-Druckbehälters zu einer Druckwasser-Kernreaktoranlage einschließlich der zugehörigen Rohrleitungen und Absperr-und Entspannungs-Einrichtungen, wobei der Filterkerzen-Druckbehälter innerhalb des Sicherheitsbehälters angeordnet ist.

FIG 3 eine Variante der Druckentlastungs-und Filtereinrichtung nach FIG 2, bei der der Filterkerzen-Druckbehälter nicht im Sicherheitsbehälter, sondern im Reaktorgebäude-Ringraum angeordnet ist.

FIG 4 eine zweite Variante zur Einrichtung nach FIG 2, bei der abweichend von FIG 2 und FIG 3 der Filterkerzen-Druckbehälter nicht im Sicherheitsbehälter und nicht im Reaktorgebäude-Ringraum, sondern im Hilfsanlagengebäude in Nähe des Abluftkamins angeordnet ist.

FIG 5 eine einzelne Filterkerze, eingeschraubt in eine Rohrplatte, vergrößert und zum Teil im Schnitt.

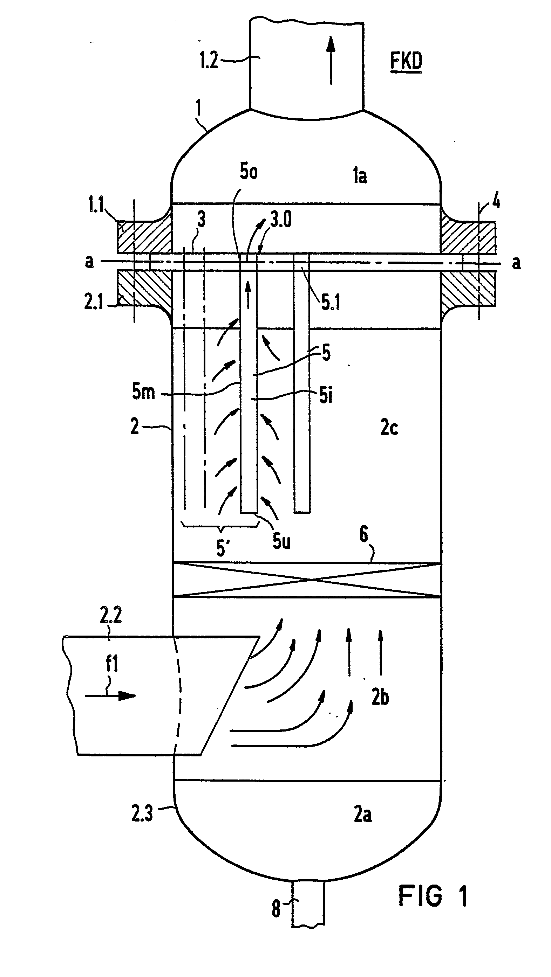

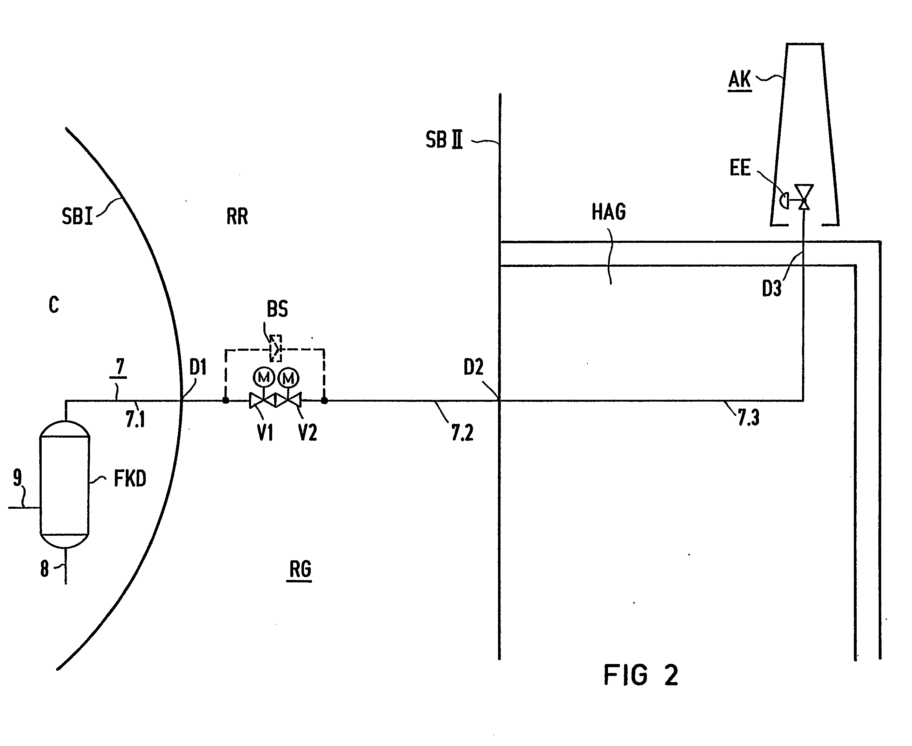

Der Filterkerzen-Druckbehälter FKD, nachfolgend abgekürzt als Druckbehälter bezeichnet, ist in FIG 1 stark vereinfacht dargestellt; er ist ein hohlzylindrischer langgestreckter Stahlbehälter, der vorzugsweise mit einer austenitischen Innenplatierung versehen ist. Der Druckbehälter FKD ist durch eine achsnormale Teilfuge a-a in seinem oberen Behälterbereich in ein Behälter-Oberteil 1 und ein Behälter-Unterteil 2 unterteilt. Beide Behälterteile 1, 2 sind mittels Ringflanschen 1.1 bzw. 2.1 dichtend unter Zwischenlage einer Rohrplatte 3 zusammengespannt, von der eine äußere Ringpartie bzw. ein Ringflansch eingespannt ist. Durch strichpunktierte Linien angedeutete Flanschschrauben 4 sind über den Umfang der Ringflanschen 1.1., 2.1 verteilt angeordnet. Die Rohrplatte 3 weist mindestens einen Kranz von Löchern auf, die ein Lochfeld bilden, d.h., es ist mindestens ein Lochkreis vorgesehen, es können jedoch auch eine Mehrzahl oder Vielzahl konzentrischer Lochkreise in der Rohrplatte 3 vorgesehen sein. In die Löcher 3.0, von denen eines näher erkennbar ist, sind die langgestreckten Filterkerzen 5 eingefügt, und - wie es für den einen Quadranten der Rohrplatte 3 strichpunktiert durch die Linien 5′ angedeutet ist - in Form eines Bündels oder einer Batterie hängend an der Rohrplatte 3 gehaltert, so daß sie in das Behälter-Unterteil 2 hineinragen. Die hängende Halterung ist unter dichtender Auflage an entsprechenden Sitzflächen der Rohrplatte 3 vorgenommen. Da die Filterkerzen 5 innen hohl sind und ihre Mantelflächen aus einem gasdurchlässigen Edelstahl-Faservlies bestehen sowie ihre untere Stirnfläche 5u dicht ist, so strömen die zu reinigenden Gemischströme gemäß Richtung der Pfeile f1 im Ansprechfalle des Druckbehälters FKD durch den Eintrittsstutzen 2.2, das Netzwerk eines noch zu erläuternden Wasserabscheiders 6, dann weiter aufwärts durch die Mantelflächen 5m der Filterkerzen 5 unter Rückhaltung der Aerosole bzw. Spaltstoffpartikel in dem Edelstahl-Faservlies der Mantelflächen 5m, wobei dann das Dampf-Gas-Gemisch durch den hohlen Innenraum 5i der Filterkerzen 5 nach oben strömt und durch einen Auslaßkanal 5.1 im oberen Halsteil 50 in den Kammerraum 1a des kalottenförmigen Behälter-Oberteils 1 einströmt und von hier dann nach oben durch den Auslaßstutzen 1.2 in die nachgeschaltete (in Fig 1 nicht dargestellte) Abströmleitung 7 (vergleiche FIG 2 bis 4).

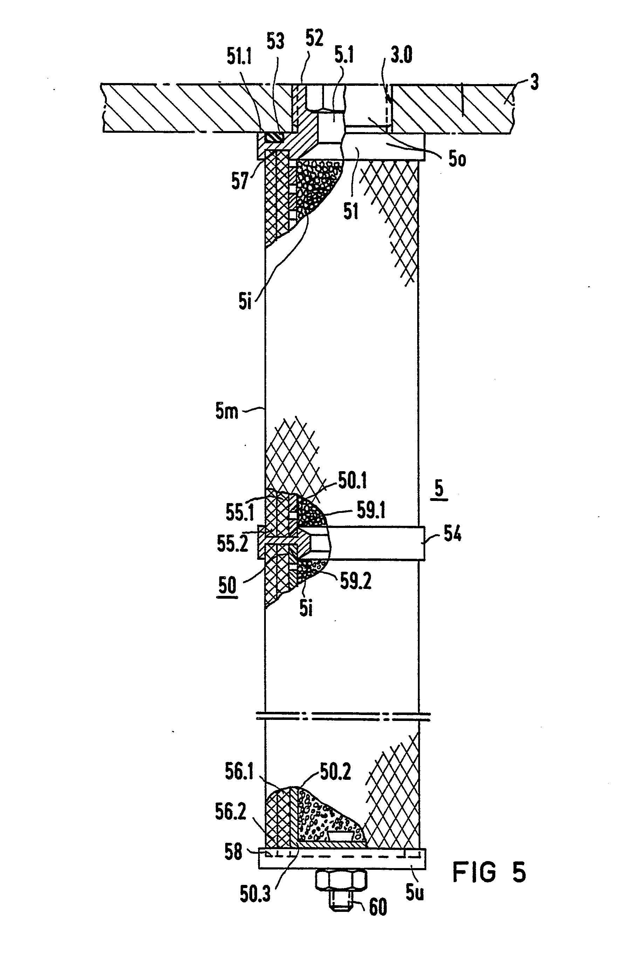

FIG 5 zeigt beispielsweise, wie eine einzelne Filterkerze 5 aufgebaut und an der Rohrplatte 3 gehaltert sein kann. Auf ein inneres Lochrohr 50 aus Edelstahl, welches am unteren Ende einen dichten Boden 50.3 aufweist, ist am oberen Ende der eine obere Endkappe bildende Halsteil 5o befestigt, z.B. angeschweißt. Der Halsteil 5o weist eine ringförmige Endplatte 51 mit Anlageringschulter 51.1 sowie einen sich von der Endplatte 51 nach oben erstreckenden Gewindestutzen 52 mit Außengewinde auf, mit welchem die Filterkerze 5 in die ein entsprechendes Innengewinde aufweisenden Löcher bzw. Bohrungen 3.0 der Rohrplatte 3 so eingeschraubt ist, daß sich die Ringschulter 51.1 dichtend gegen die Rohrplatten-Unterseite legt, wobei in eine Ringnut an der Oberseite der Endplatte 51 noch ein O-Ring 53, wie dargestellt, eingelegt sein kann, der unter elastischer Deformation eine weitere dichtende Anlage ergibt. Im Inneren des Halsteils 5.o bzw. der Endplatte 51 und des Gewindestutzens 52 verläuft der Auslaßkanal 5.1 für die gefilterten Gemischströme, der Gewindestutzen 52 hat außerdem einen Innenmehrkant 52.1 zum Ansetzen von Schraubwerkzeug.

Bei größerer Länge der Filterkerzen 5 kann, wie dargestellt, das innere Lochrohr 50 auch achsnormal in zwei Teilstücke unterteilt sein, welche durch einen Zwischenring 54 starr miteinander verbunden, z.B. miteinander verschweißt sind. Bei dieser geteilten Ausführung sind auch zwei axial hintereinander liegende Zylinderabschnitte der beiden Edelmetall-Faservlies-Schichten 55.1, 55.2 bzw. 56.1, 56.2 vorgesehen, welche außen auf den Umfang der beiden Lochrohrabschnitte 50.1 bzw. 50.2 aufgebracht und mit ihren stirnseitigen Enden jeweils in Ringnuten 57, 58 (im Bereich der beiden Enden der Filterkerze 5) und 59.1, 59.2 am Zwischenring 54 gefaßt und gehalten sind. Die Ringnut 58 befindet sich an der Innenseite einer unteren Endkappe, welche das untere Ende 5u der Filterkerze 5 bildet. Diese untere Endkappe ist an der unteren Stirnwand 50.3 des inneren Lochrohres 50 bzw. am unteren Abschnitt 50.2 dieses Lochrohres festgeschraubt, z.B. mittels eines an der unteren Stirnwand 50.3 befestigten, diese durchdringenden Bolzens 60, auf welchen die untere Endkappe 5u mit einer zentralen Bohrung aufgeschoben und dann durch Aufschrauben der Mutter (es können nicht dargestellte dichtende Beilagen und Federscheiben vorgesehen sein) befestigt ist. Anstelle der erwähnten Edelstahl-Faservlies-Filterschichten 55.1 bis 56.2, welche den Filtermantel 5m bilden, könnten auch sogenannte Metall-Membran-Filterschichten verwendet werden, bei welchen gesinterter, poröser Edelstahl als Filtermaterial dient. Die Herstellung des letzterwähnten Filtermaterials ist z.B. in der US-PS 4 562 039 beschrieben. Mit solchen Filterschichten kann man Partikel zurückhalten, deren Korngröße sogar unter ein $\mu$m liegt.

Zurück zum Behälter FKD nach FIG 1: Der Behälter-Unterteil 2 ist unterhalb der Filterkerzen 5 und oberhalb des Eintrittsstutzens 2.2 mit einem Tröpfchen-Wasserabscheider 6, bestehend aus einem (nicht näher dargestellten) Edelstahldraht-Netzwerk mit Halterung, auch als wire-mesh-Type bezeichnet, versehen, der also, wie es die Strömungspfeile f1 verdeutlichen, im Strömungsweg des noch nicht gefilterten Gemischstromes zwischen Eintrittsstutzen 2.2 und Filterkerzen 5 liegt. Das Unterteil 2 ist nach unten durch eine Bodenkalotte 2.3 mit Kondensataustrittsstuzen 8 abgeschlossen; das von dem Wasserabscheider 6 nach unten abtropfende Kondensat sammelt sich am Boden des Kalottenraumes 2a und fließt durch den Austrittsstutzen 8 zu einem (nicht dargestellten) Kondensatsammelbehälter. Durch die dargestellte spitzwinklige Abschrägung der Mündung des Eintrittsstutzens 2.2 ergibt sich eine (gewünschte) fliehkraftvergrößernde Dampfumlenkung, welche zur Vorabscheidung günstig ist. Der Einströmraum des Dampf-Gas-Gemisches unterhalb des Wasserabscheiders 6 ist mit 2b, der die Filterkerzen 5 aufnehmende, oberhalb des Wasserabscheiders 6 gelegene Raum des Unterteils 2 mit 2c bezeichnet. Innerhalb des Einströmstutzens 2.2 oder der daran angrenzenden Einströmleitung 9 (vergleiche FIG 2 bis 4) kann eine Berstscheibe angeordnet sein, die das Innere des Druckbehälters FKD nach außen abschließt und nur bei einer Ansprech-Druckdifferenz von z.B. 5 bar reißt bzw. birst, so daß das Innere des Druckbehälters bis zum Ansprechfalle ohne jeden Angriff partikelbeladener Ströme in Bereitschaft gehalten werden kann. Für ein Druckwasser-Kernkraftwerk der 1300 MW-Klasse würde ein solcher in Bereitschaft zu haltender Druckbehälter ausreichen. Da er verhältnismäßig kompakt ist, ist eine Unterbringung im Containment möglich, wie es FIG 2 prinzipiell zeigt.

Darin ist der das Containment C nach außen umgebende und einschließende kugelförmige Sicherheitsbehälter aus Stahl mit SBI bezeichnet und die Wand des diesen Sicherheitsbehälter SB unter Freilassung eines Reaktorgebäude-Ringraumes RR umgebenden Reaktorgebäudes mit SBII. Dieses Reaktorgebäude RG umgibt mit seinen Wänden in Zellen-oder Kammer-Bauweise als Sekundärabschirmung den Sicherheitsbehälter SBI, es ist als Ganzes als RG bezeichnet. An die Wand SBII des Reaktorgebäudes RG grenzt das Hilfsanlagengebäude HAG an, und benachbart zu diesem ist - schematisch ein Abluft-Kamin AK eingezeichnet. Die Abströmleitung 7 des Druckbehälters FKD ist vom Containment C durch den Reaktorgebäude-Ringraum RR und das Hilfsanlagengebäude HAG bis zum unteren Bereich des Abluftkamins AG verlegt und endet in einer Entspannungseinrichtung EE, welch letztere z.B. eine Entspannungsdrossel sein kann oder eine Kombination von mindestens zwei zueinander parallel geschalteten Entspannungsventilen. Auf ihrem Weg durchdringt die Abströmleitung 7 dichtend die Wand des sich Sicherheitsbehälters SBI (Durchführungsstelle D1), die Wand SBII des Reaktorgebäudes RG (Durchführungsstelle D2) und die Außenwand des Hilfsanlagengebäudes HAG (Durchführungsstelle D3). Der innerhalb des Reaktorgebäude-Ringraumes RR verlaufende Abschnitt 7.2 der Abströmleitung 7 ist mit einer Absperrarmaturen-Anordnung, bestehend aus den beiden in Reihe zueinander geschalteten, motorgetriebenen Absperrventilen V1, V2 versehen. Parallel zu dieser Reihenschaltung V1-V2 kann auch eine Berstscheibenanordnung BS parallelgeschaltet sein, welche für eine automatische Öffnung des Abströmpfades bei einem vorgegebenen Ansprech-Differenzdruck sorgt, sollten beide Absperrventile in ihrer Schließstellung unerwarteter Weise klemmen. Die Berstscheiben-Anordnung ist gestrichelt dargestellt.

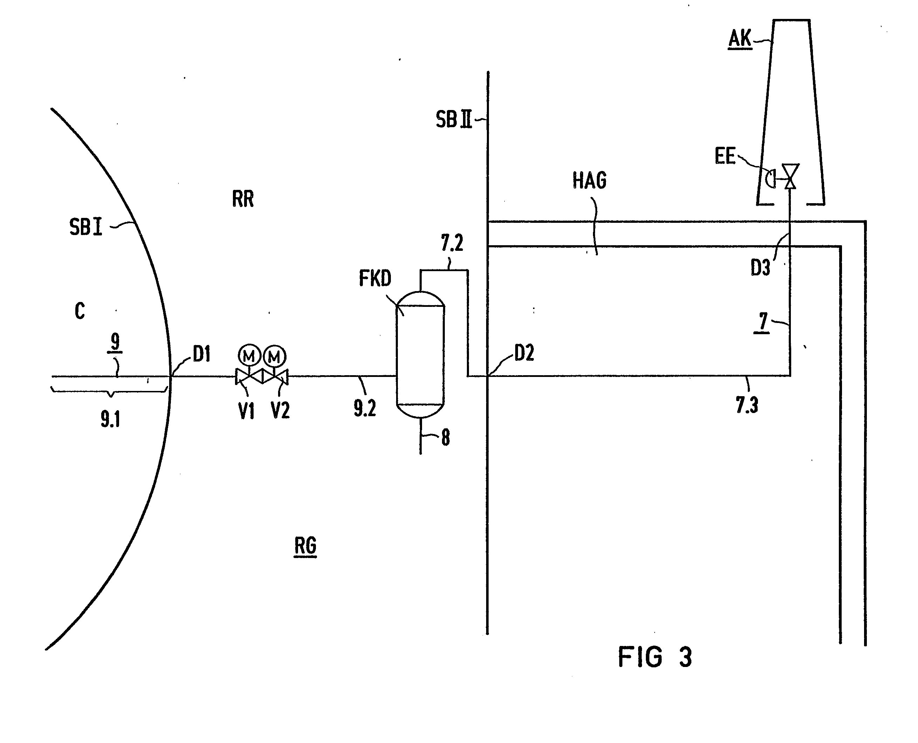

Die in FIG 3 dargestellte Variante der Filter-und Entlastungs-Einrichtung nach FIG 2 unterscheidet sich von derjenigen nach FIG 2 dadurch, daß der Druckbehälter FKD im Reaktorgebäude-Ringraum RR untergebracht und die Absperrarmaturen-Anordnung V1-V2 ebenfalls im Reaktorgebäude-Ringraum RR, jedoch innerhalb der Einströmleitung 9 angeordnet ist, und zwar im Leitungsabschnitt 9.2, der von der Wand des Sicherheitsbehälters SBI bis zum Druckbehälter FKD reicht, wobei innerhalb des Containments C lediglich ein Abschnitt 9.1 der Einströmleitung 9 untergebracht werden muß.

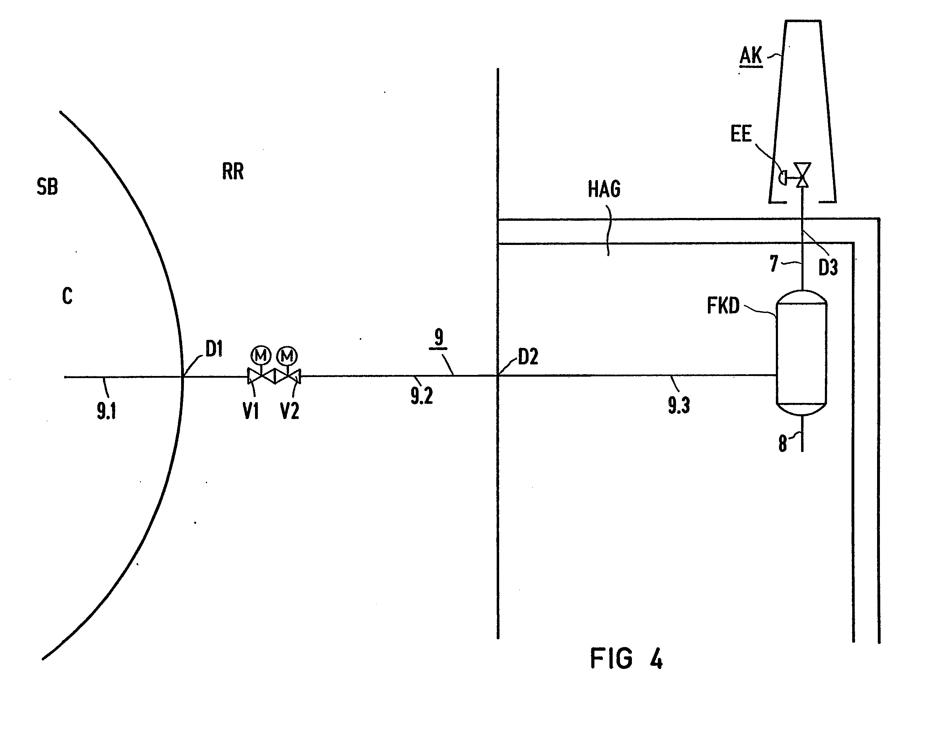

Die zweite Variante der Druckentlastungs-und Filtereinrichtung nach FIG 4 unterscheidet sich von der ersten Variante nach FIG 3 dadurch, daß der Druckbehälter FKD noch weiter nach außen, und zwar vom Reaktorgebäude-Ringraum RR in das Hilfsanlagengebäude HAG, verlagert worden ist. Infolgedessen ergeben sich drei Abschnitte 9.1., 9.2, 9.3 der Einströmleitung 9 im Conatainment C, im Reaktorgebäude-Ringraum R bzw. im Hilfsanlagengebäude HAG mit entsprechenden druckdichten Leitungsdurchführungen D1 und D2. Die dritte Leitungsdurchführung D3 gehört zur Abströmleitung 7. Diese Variante nach FIG 4 ist besonders vorteilhaft, wenn zur verstärkten Radio-Jod-Rückhaltung und zur weiteren Verbesserung des Rückhaltegrades sonstiger Schadstoffe die Abströmleitung 7 des Druckbehälters (zweckmäßig über eine geeignete Entspannungsstrecke) über eine Nachschalt-Filterstrecke, bestehend aus einer Aktivkohle-und gegebenenfalls einer Schwebstoff-Filter-Strecke, geführt ist. Im Hilfsanlagengebäude ist im allgemeinen die Bedarfsfilter-Anlage des Kernkraftwerkes untergebracht, und so könnte man einen Teil der Module dieser Bedarfsfilter-Anlage als Nachschalt-Filterstrecke für die Gemischströme in der Abströmleitung 7, bevor diese dann in den Abluftkamin AK geleitet werden, mitbenutzen.

Für die Beispiele nach FIG 3 und FIG 4 gilt ebenso, daß man die Absperrarmaturen-Anordnung V1-V2 mit einer Berstscheiben-Armatur BS, wie in FIG 2 prinzipiell dargestellt, versehen könnte. Im Zusammenhang mit FIG 1 erwähnte Reißmembranen oder Berstscheiben in der Einströmleitung 9 sind in den Figuren 2 bis 4 nicht dargestellt. Es ist, wie in den drei Beispielen nach FIG 2 bis 4 gezeigt, günstig, die Absperrarmaturen-Anordnung V1-V2 im Reaktorgebäude-Ringraum RR unterzubringen, entweder im Zuge der Abströmleitung 7 (FIG 2) oder im Zuge der Einströmleitung 9 (FIG 3, FIG4). In FIG 2 ist die Abströmleitung am längsten mit ihren drei Abschnitten 7.1 im Containment, 7.2. im Reaktorgebäude-Ringraum RR und 7.3 im Hilfsanlagengebäude. In FIG 4 ist die Einströmleitung 9 etwa so lang wie die Abströmleitung in FIG 2, mit ihren Abschnitten 9.1, 9.2 und 9.3. FIG 3 zeigt eine Kombinationslösung, bei der der Abschnitt 9.2 der Einströmleitung und der Abschnitt 7.2 der Abströmleitung beide im Reaktorgebäude-Ringraum verlegt sind, weil dort auch der Druckbehälter FKD angeordnet ist.

## Ansprüche

1. Druckentlastungs-und Filtereinrichtung für kerntechnische Anlagen,
insbesondere für den Sicherheitsbehälter (SBI) von Druckwasserreaktoren,
zur Rückhaltung von Spaltprodukten, insbesondere spaltstoffbeladenen Aerosolen, welche in störfallbedingt postulierten heißen, unter Überdruck stehenden Dampf-Gas-Gemischen innerhalb des Sicherheitsbehälters enthalten sind, und zur Entspannung der gereinigten Gemischströme ins Freie,
**gekennzeichnet durch**
- einen Druckbehälter (FDK) mit wenigstens
--einem Filterkerzen-Einsatz (5, 3) in seinem Inneren,
--einem Eintrittsstutzen (2.2) für den zu filternden Gleichstrom auf der Anströmseite der Filterkerzen (5),
--einem Austrittsstutzen (1.2) für den gereinigten Gemischstrom auf der Abströmseite der Filterkerzen (5),
- und an die Stutzen für Ein-und Austritt des Gemischstromes angeschlossene Rohrleitungen (7, 9) mit zugehörigen Absperr-und Entspannungs-Einrichtungen (V1, V2; EE).

2. Druckentlastungs-und Filtereinrichtung nach Anspruch 1,
**dadurch gekennzeichnet, daß** im Behälter-Inneren ein Tröpfchen-Wasserabscheider (6) im Strömungsweg des Gemischstromes zwischen Eintrittsstutzen (2.2) und Anströmseite der Filterkerzen (5) und unterhalb des Tröpfchen-Wasserabscheiders (6) eine Kondensat-Sammeleinrichtung mit Kondensat-Auslaßstutzen (8) angeordnet ist.

3. Druckentlastungs-und Filtereinrichtung nach Anspruch 1 oder 2, **dadurch gekennzeichnet,** daß ein langgestreckter hohlzylindrischer Druckbehälter (FKD) durch eine achsnormale Teilfuge (a-a) in seinem oberen Behälterbereich in ein Behälter-Oberteil (1) und -Unterteil (2) unterteilt ist, wobei beide Behälterteile mittels Ringflanschen (1.1. 2.1) dichtend zusammengespannt sind, und daß in mindestens einem rohrplattenartigen, ein Lochfeld (3.0) aufweisenden Einsatzteil (3), der mit einem Flansch zwischen Behälterober-und -unterteil (1, 2) fixierbar ist, die langgestreckten Filterkerzen (5) in Form eines Bündels oder eine Batterie (5') hängend unter dichtender Auflage (2) gehaltert sind, so daß sie in den Behälter-Unterteil hineinragen.

4. Druckentlastungs-und Filtereinrichtung nach einem der Ansprüche 1 bis 3,
**dadurch gekennzeichnet, daß** ihr Druckbehälter (FKD) innerhalb des Sicherheitsbehälters (SBI) des Druckwasserreaktors angeordnet ist und an den Austrittstutzen (1.2) des Druckbehälters für den gereinigten Gemischstrom eine Rohrleitung (7) angeschlossen ist, welche die Wand des Sicherheitsbehälters (SBI) und den Reaktorgebäude-Ringraum (RR) sowie dessen Stahlbetonhülle (SBII) dichtend durchdringt und durch das Hilfsanlagengebäude (HAG) zum Einlaß eines benachbarten Ablufkamins (AK) verlegt ist, in welchen sie über eine Entspannungseinrichtung (EE), z.B. eine Entspannungsdrossel, mündet.

5. Druckentlastungs-und Filtereinrichtung nach einem der Ansprüche 1 bis 3,
**dadurch gekennzeichnet, daß** ihr Druckbehälter (FKD) innerhalb des Reaktorgebäude-Ringraumes angeordnet ist, daß an den Eintrittsstutzen (2.2) des Druckbehälters eine vom Containment (C) zum Reaktorgebäude-Ringraum (RR) verlegte Einströmleitung (9) angeschlossen ist, welche die Wand des Sicherheitsbehälters (SBI) dichtend durchdringt, und daß die an den Abströmstutzen (1.2) des Druckbehälters angeschlossene Abströmleitung (7) durch die Stahlbetonhülle (SBII) des Reaktorgebäude-Ringraumes (RR) dichtend hindurchgeführt sowie durch das Hilfsanlagengebäude (HAG) zum Einlaß des benachbarten Abluftkamins (AK) verlegt ist und in diesen über die Entspannungseinrichtung (EE) mündet.

6. Druckentlastungs-und ·Filtereinrichtung nach einem der Ansprüche 1 bis 3, **dadurch gekennzeichnet**, daß ihr Druckbehälter (FKD) im Hilfsanlagengebäude (HAG) untergebracht ist, daß an den Eintrittsstutzen (2.2) des Druckbehälters eine .Einströmleitung (9) angeschlossen ist, welche vom Containment (C) durch den Reaktorgebäude-Ringraum (RR) bis zum Hilfsanlagengebäude (HAG) verlegt ist und die Wand des Sicherheitsbehälters (SBI) sowie die Stahlbetonhülle (SBII) des Reaktorgebäude-Ringraumes (RR) dichtend durchdringt, und daß die an den Abströmstutzen (1.2) des Druckbehälters angeschlossene Abströmleitung (7) durch das Hilfanlagengebäude (HAG) zum benachbarten Abluftkamin (AK) verlegt ist und in diesem über die Entspannungseinrichtung (EE) mündet.

7. Druckentlastungs-und Filtereinrichtung nach einem der Ansprüche 3 bis 6, **dadurch gekennzeichnet** daß der innerhalb des Reaktorgebäude-Ringraumes (RR) verlaufende Abschnitt (9.2 bzw. 7.2) der Einström-bzw. Abströmleitung (9 bzw. 7) mit einer Absperrarmaturen-Anordnung (V1-V2) versehen ist.

8. Druckentlastungs-und Filtereinrichtung nach Anspruch 7, **dadurch gekennzeichnet**, daß die Absperrarmaturen-Anordnung wenigstens zwei zueinander in Reihe liegende, motorgetriebene, fernbetätigbare Absperrventile (V1, V2) aufweist.

9. Druckentlastungs-und Filtereinrichtung nach einem der Ansprüche 1 bis 8, **dadurch gekennzeichnet**, daß zur verstärkten Radio-Jod-Rückhaltung und zur weiteren Verbesserung des Rückhaltegrades sonstiger Schadstoffe die Abströmleitung (7) des Druckbehälters (FKD) über eine Nachschalt-Filterstrecke, bestehend aus einer Aktivkohle-und gegebenenfalls einer Schwebstoff-Filter-Strecke, geführt ist.

10. Druckentlastungs-und Filtereinrichtung nach Anspruch 9, **dadurch gekennzeichnet**, daß die im Hilfsanlagengebäude (HAG) vorhandene Bedarfsfilter-Anlage als Nachschalt-Filterstrecke, zumindest teilweise, mitbenutzt ist.

11. Druckentlastungs-und Filtereinrichtung nach Anspruch 8, **gekennzeichnet durch** wenigstens eine Berstscheiben-Armatur (BS), die in einem Bypaß zur Absperrarmaturen-Anordnung (V1-V2) eingeschaltet ist und im Überdruckfalle bei Klemmen der parallelliegenden Absperrventile in deren Schließstellung anspricht.

FIG 1

87 P 6036

FIG 2

FIG 3

87 P 6036

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 056 830 (SCHWEIGER)<br>* Figur 3; Seite 19, Zeilen 7-18 *<br>--- | 1,2 | G 21 C 9/00 |
| A | NUCLEAR TECHNOLOGY, Band 70, Nr. 2, August 1985, Seiten 158-160; A.H. PERSSON: "The filtered venting system under construction at Barsebäck"<br>* Figur 1; Seiten 158-159: "System description" *<br>--- | 1,2 | |
| A | FR-A-2 269 177 (NGK INSULATORS)<br>* Figur 6; Seite 2, Zeile 37 - Seite 3, Zeile 2; Seite 4, Zeile 39 - Seite 5, Zeile 8; Anspruch 13 *<br>--- | 1,3 | |
| A | FR-A-2 533 142 (KF KARLSRUHE)<br>* Figuren 2,5; Ansprüche 1,2 *<br>--- | 1 | |
| A | DE-A-3 212 265<br>(HOCHTEMPERATUR-REAKTORBAU)<br>&DE-C-3 212 265 (Kat. D,A)<br>--- | | |
| A,D | NUCLEAR ENGINEERING INTERNATIONAL, Band 32, Nr. 392, März 1987, Seiten 35-38; J. VARLEY: "Germans take a new look at core melt consequences"<br>--- | | |
| A | EP-A-0 166 606 (PALL)<br>& US-A-4 562 039 (Kat. D,A)<br>----- | | |

**RECHERCHIERTE SACHGEBIETE (Int. Cl.4)**

G 21 C 9/00
G 21 D 3/00
G 21 F 9/00
G 21 C 19/00
B 01 D 46/24

Der vorliegende Recherchenbericht wurde für alle Patentansprüche erstellt

| Recherchenort | Abschlußdatum der Recherche | Prüfer |
|---|---|---|
| DEN HAAG | 10-08-1988 | FRITZ S.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)